# NEUE EUROPÄISCHE PATENTSCHRIFT

(11) **EP 1 640 100 B2**
(45) Veröffentlichungstag und Bekanntmachung des Hinweises auf die Entscheidung über den Einspruch: **21.03.2012**
(45) Hinweis auf die Patenterteilung: 24.12.2008
(21) Anmeldenummer: 05017731.0
(22) Anmeldetag: 16.08.2005
(51) Int. Cl.: B23K 9/073

(54) **Vorrichtung und Verfahren zum Metall-Schutzgas (MSG)-Lichtbogenschweissen**
Shielded arc welding process and device
Méthode et dispositif de soudage à l'arc sous gaz de protection

(30) Priorität: 24.09.2004 DE 102004046688
(43) Veröffentlichungstag der Anmeldung: 29.03.2006
(73) Patentinhaber: EWM Hightec Welding GmbH, 56271 Mündersbach (DE)
(72) Erfinder: Szczesny, Michael, 56235 Ransbach-Baumbach (DE)
(74) Vertreter: Cohausz & Florack

(56) Entgegenhaltungen:
- DE-A1- 3 200 086
- US-A- 4 301 355
- US-A- 6 111 218

## Beschreibung

Die Erfindung betrifft eine Vorrichtung sowie ein Verfahren zum Metall-Schutzgas (MSG)-Lichtbogenschweißen mit einem eine Stromquelle mit Konstantstromcharakteristik darstellenden Leistungsteil enthaltend einen netzspannungsgespeisten Gleichrichter, einen über einen Zwischenkreis daran angeschlossenen Stromwandler, der über eine Steuereinrichtung getaktet ist und einen sekundärseitigen Gleichrichter, der über ein Glättungsglied den Schweißprozess versorgt, einem Statik-Schaltkreis, welchem eine Spannungsistwerterfassung und eine Spannungssollwertvorgabeeinrichtung vorgeordnet sind, einem Dynamik-Schaltkreis, der dem Statik-Schaltkreis nachgeordnet ist und der einen Stromsollwert Iₛₒₗₗ für einen Stromregler des Leistungsteils liefert, wobei der Stromregler seinen Stromistwert Iᵢₛₜ von einer Stromistwerterfassung erhält.

Eine Vorrichtung dieser Art ist bekannt aus der Deutschen Patentschrift DE 32 00 086 C2. Eine solche Schweißenergiequelle zeichnet sich dadurch aus, dass sich das für den Schweißprozess erforderliche statische und dynamische Verhalten durch die beiden elektronischen Schaltkreise, nämlich Statik- und Dynamik-Schaltkreis, im Zusammenwirken mit dem steuerbaren elektronischen Leistungsteil mit Konstantstromcharakteristik vorgeben und programmieren lässt.

Abhängig von den Regelvorgängen im Statik- bzw. Dynamik-Schaltkreis erfolgt eine Verschiebung der Kennlinie des Leistungsteils mit einer entsprechenden Verlagerung des Arbeitspunktes.

Beim Metall-Schutzgas-Lichtbogenschweißen stellen sich je nach der Wahl der Schweißparameter unterschiedliche Lichtbogentypen ein, die sich vor allem im Werkstoffübergang unterscheiden. Bei geringen Schweißstromstärken stellt sich der sogenannte Kurzlichtbogen ein. Beim Kurzlichtbogenprozess geht der Werkstoff ausschließlich im Kurzschluss über, wenn der Tropfen durch die kontinuierliche Drahtzufuhr und durch das Tropfenwachstum die Schmelzbadoberfläche berührt. Dabei verlischt der Lichtbogen und zündet in der mit Metalldämpfen ionisierten Atmosphäre wieder, wenn der Tropfen in Folge des hohen Kurzschlussstromes abgeschnürt ist. Das Schmelzbad beim Kurzlichtbogenprozess ist aufgrund der geringen Energieeinbringung klein und zähflüssig, so dass dieser bevorzugt zum Schweißen dünner Bleche und nur einseitig zugänglicher Wurzellagen bei dicken Blechen sowie zum Schweißen in Zwangslagen eingesetzt wird.

Bei einer Erhöhung des Schweißstromes wird ab einer kritischen Stromstärke eine starke Erhöhung der Tropfenfrequenz und gleichzeitig eine deutliche Abnahme der Tropfengrößen beobachtet. In einem Übergangslichtbogenbereich, dem sogenannten Mischlichtbogen, geht dennoch der Tropfen teilweise im Kurzschluss über. Dieser Bereich ist insbesondere in Bezug auf die Spritzerbildung sehr kritisch.

Bei einer weiteren Erhöhung des Schweißstromes erreicht man den Bereich des sogenannten Sprühlichtbogens, welcher durch einen völlig kurzschlussfreien und feinsttröpfigen Werkstoffübergang gekennzeichnet ist. Mit dem Sprühlichtbogen stellt sich im Strom- und Spannungsverlauf ein zeitlich sehr gleichmäßiger Schweißprozess ein. Für die Tropfenablösung im Sprühlichtbogen ist in erster Linie der sogenannte Pincheffekt verantwortlich, bei der eine Einschnürung des Tropfens in Folge der Lorenzkraft erfolgt. In der Phase des Sprühlichtbogens geht also während der gesamten Zeit stets ein feintröpfiges Material über.

Als nachteilig beim Betrieb eines Lichtbogenschweißgerätes im Bereich des Sprühlichtbogens ist anzusehen, dass aufgrund des vergleichsweisen breiten Lichtbogens ein ungünstiger Einbrand erfolgt. Zudem ist ein Schweißen unter Zwangslagen in diesem Bereich in der Regel nicht möglich.

Daher liegt der Erfindung davon ausgehend die Aufgabe zugrunde, eine Vorrichtung bzw. ein Verfahren der eingangs genannten Art dahingehend zu verbessern, dass auch im Betrieb des Sprühlichtbogens ein verbessertes Schweißverhalten erreicht wird.

Diese Aufgabe wird erfindungsgemäß bei einer Vorrichtung bzw. einem Verfahren der eingangs genannten Art dadurch gelöst, dass dem Statik-Schaltkreis (10) Mittel (7) zur Nachbildung des Innenwiderstandes der Stromquelle zugeordnet ist und dass für den Betrieb der Vorrichtung in der Sprühlichtbogenphase dem Stromregler eine Modulatorschaltung derart zugeordnet ist, dass dem Schweißstrom Is ein periodischer wechselfrequenter Strom mit einer Frequenz im Bereich von 20 bis 1000 Hz überlagert ist.

Es ist die Besonderheit der vorliegenden Erfindung, dass durch die Überlagerung des Schweißstromes mit einem rein wechselfrequenten Strom eines Frequenzbereichs zwischen 20 und 1000 Hz ein im Ergebnis insgesamt steiferer Lichtbogen erreicht wird, welcher zu einem verbesserten Einbrand führt. Durch den überlagerten Wechselstrom, ergibt sich im Bereich der lokalen Strommaxima eine höhere Einschnürung des Lichtbogens. Durch die Modulation des Schweißstroms wird bei gleichbleibender mittlerer Energie in vorteilhafter Weise die Form des Lichtbogens beeinflusst.

Durch die Wahl der Frequenz in dem genannten Bereich wird erreicht, dass das Schweißbad in Wallung gebracht wird, wodurch sich nicht nur eine bessere Ausgasung der Naht sondern auch ein verbessertes Aussehen der Schweißnaht in Form einer gleichmäßigen Schuppung erreicht wird. Das erfindungsgemäße Verfahren ist insbesondere auch für das Schweißen in Zwangslagen geeignet.

Weitere bevorzugte Ausführungsformen der Erfindung ergeben sich aus den nachgeordneten Unteransprüchen.

Die Erfindung wird im Folgenden anhand einer Zeichnung näher erläutert, dabei zeigen
- Figur 1:: ein Blockschaltbild für ein Ausführungsbeispiel der vorliegenden Erfindung;
- Figuren 2, 3 und 4:: jeweils Diagramme zur Erläuterung der Funktionsweise der Vorrichtung nach Anspruch 1, wobei

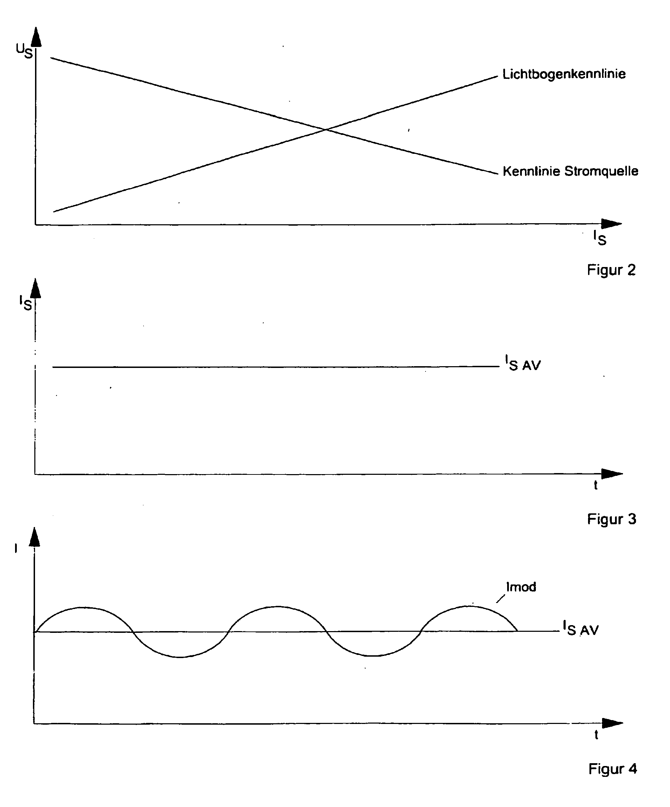

- Figur 2:: die Abhängigkeit der Schweißspannung vom Schweißstrom,
- Figur 3:: die Abhängigkeit des Schweißstromes von der Zeit und
- Figur 4:: die Abhängigkeit des Schweißstromes von der Zeit unter Berücksichtigung der erfindungsgemäßen Strommodulation darstellen.

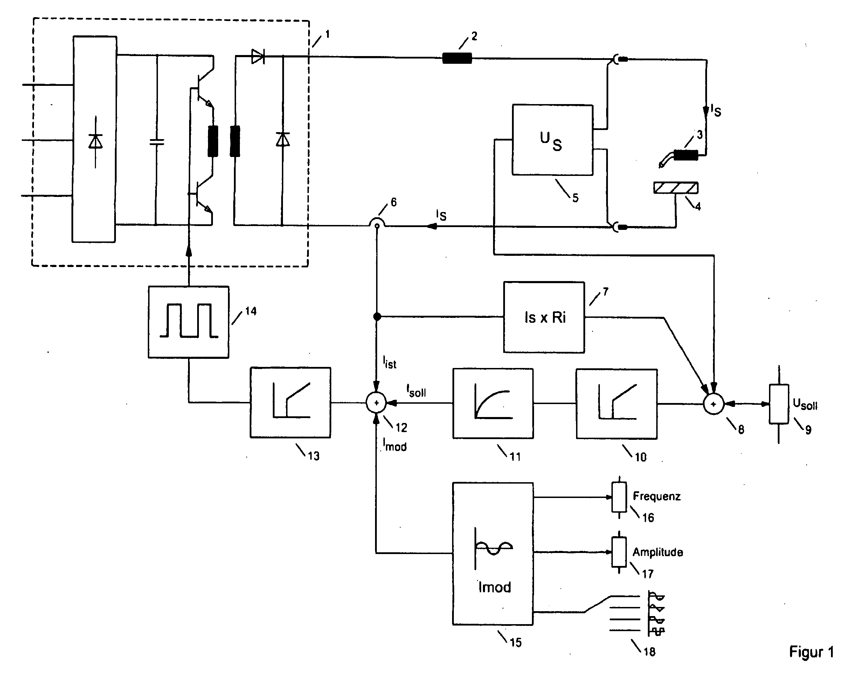

Die in Figur 1 dargestellte Vorrichtung zum Metall-Schutzgas-Lichtbogenschweißen besteht zunächst aus einem allgemein mit dem Bezugszeichen 1 dargestellten Leistungsteil. Dieses enthält einen netzspannungsgespeisten Gleichrichter, einen über einen kapazitiven Zwischenkreis daran angeschlossenen Stromwandler, welcher über eine Steuereinrichtung 14 getaktet wird. Sekundärseitig des Stromwandlers ist eine weitere Gleichrichterschaltung vorgesehen, welche über ein Glättungsglied 2 in Form einer Induktivität den Schweißprozess 3, 4 versorgt. Der in den Schweißprozess 3, 4 fließende Strom wird mit Is und die am Schweißprozess anliegende Spannung mit Us bezeichnet.

Für die Detektierung der jeweiligen Istwerte ist eine Schweißstrommesseinrichtung 6 und eine Schweißspannungsmesseinrichtung 5 vorgesehen. Die Schweißspannungsmesseinrichtung 5 ist mit einem Summationspunkt 8 für ein einen Spannungsregler bildendes Statikmodul 10 verbunden, wobei dem Summationspunkt 8 auch eine Sollwertvorgabeschaltung für den Schweißstrom Uₛₒₗₗ und eine noch zu beschreibende <Innenwiderstandsnachbildungschaltung 7 zugeordnet sind.

Dem Statikmodul 10 nachgeordnet ist ein Dynamikmodul 11, dessen Ausgang den Sollwert für einen Stromregler bildet, dessen Summationspunkt 12 neben dem Sollwert auch den Istwert des Schweißstromes von der Schweißstromistwerterfassung 6 erhält. Ebenfalls gekoppelt mit der Schweißstromistwerterfassung 6 ist der Eingang der Innenwiderstandsnachbildungshaltung 7. Darüber hinaus arbeitet auf dem Summationspunkt 12 des Stromreglers auch eine Modulatorschaltung 15, welche dem Schweißstrom Is einen periodischen Wechselstrom überlagert, dessen Frequenz von einer Frequenzvorgabeeinrichtung 16, dessen Amplitude von einer Amplitudenvorgabeeinrichtung 17 und dessen Form von einer Formschaltung 18 vorgebbar ist.

Der Summationspunkt des Stromreglers 12 ist mit dem Stromregler 13 verbunden, dessen Ausgang die Steuereinrichtung 14 für das Leistungsteil 1 mit Konstantstromverhalten ansteuert.

Die erfindungsgemäße Vorrichtung nach dem Ausführungsbeispiel arbeitet wie folgt:

Aus der am Schweißprozess 3, 4 anliegenden Schweißspannung Us wird unter Berücksichtigung der Sollwertvorgabeschaltung 9 im Statikschaltkreis 10 eine Vorgabegröße erzeugt. Die Erzeugung erfolgt unter Berücksichtigung der Kennlinie der Stromquelle, welche durch deren Innenwiderstand Ri gekennzeichnet ist. Durch die Multiplikation des jeweiligen gemessenen Stromwertes Is mit dem Innenwiderstand und der Addition des Produktwertes am Summationspunkt 8 wird die in Figur 2 dargestellte Kennlinie der Stromquelle bei der Ermittlung des Arbeitspunktes berücksichtigt. Durch die Wirkung des dem Statikschaltkreis 10 nachgeordneten Schaltkreises 11, welcher im Wesentlichen ein Pt-1-Glied mit einer entsprechenden Zeitverzögerung darstellt, verändert sich die Stromkennlinie des Leistungsteils und damit auch der Schweißprozess entsprechend und es ergibt sich die aus dem Stand der Technik bekannte Rückführung des momentanen Arbeitspunktes auf die statische Kennlinie.

Im Ergebnis stellt sich der in Figur 3 dargestellte konstante zeitliche Verlauf des Schweißprozesses des Schweißstromes unter der Wirkung der Konstantstromcharakteristik ein.

Figur 4 zeigt nun die erfindungsgemäß vorgeschlagene Überlagerung des in Figur 3 dargestellten konstanten Schweißstromes mit einem Modulationsstrom, welcher reinen Wechselstrom darstellt mit einer Frequenz, welche im Bereich von 20 bis 1000 Hz, bevorzugt zwischen 200 und 600 Hz, liegt. Die in Figur 3 dargestellte Überlagerung zu dem modulierten Strom I_{mod} ergibt sich durch Wirkung der Einrichtung 15. Die Amplitude in der Vorgabeschaltung 17 wird dabei unter praktischen Gesichtspunkten gewählt ebenso wie die Form des Modulationsstromes aus der Vorgabeschaltung 18.

Im Betriebsbereich des Sprühlichtbogens lässt sich damit in den Phasen relativer Maxima des Stromverlaufs in Figur 4 eine höhere Einschnürung des Lichtbogens erreichen, so dass dieser steifer wird und ein verbesserter Einbrand die Folge ist. Die mittlere Energie, die vom Schweißgerät zur Verfügung gestellt wird, ändert sich dabei jedoch nicht.

Bei einem Sprühlichtbogenbetrieb, bei dem also jederzeit Material übergeht, lässt sich hierdurch das Schweißverhalten so verbessern, dass auch in Zwangslagen gearbeitet werden kann. Es lassen sich wesentlich bessere Schweißnähte herstellen insbesondere deswegen, weil eine gleichmäßige Schuppung erreicht wird.

## Patentansprüche

1. Vorrichtung zum Metall-Schutzgas (MSG)-Lichtbogenschweißen mit
- einem eine Stromquelle mit Konstantstromcharakteristik darstellenden Leistungsteil (1) enthaltend einen netzspannungsgespeisten Gleichrichter, einen über einen Zwischenkreis daran angeschlossenen Stromwandler, der über eine Steuereinrichtung (14) getaktet ist und einen sekundärseitigen Gleichrichter, der über ein Glättungsglied (2) den Schweißprozess (3,4) versorgt,
- einem Statik-Schaltkreis (10), welchem eine Spannungsistwerterfassung (5) und eine Spannungssollwertvorgabeeinrichtung (9) vorgeordnet sind,
- einem Dynamik-Schaltkreis (11), der dem Statik-Schaltkreis (10) nachgeordnet ist und der einen Stromsollwert Iₛₒₗₗ für einen Stromregler (13) des Leistungsteils (1) liefert, wobei der Stromregler (13) seinen Stromistwert Iᵢₛₜ vom einer Stromistwerterfassung (6) erhält,
**dadurch gekennzeichnet, dass** dem Statik-Schaltkreis (10) Mittel (7) zur Nachbildung des Innenwiderstandes der Stromquelle zugeordnet sind und dass für den für den Betrieb der Vorrichtung in der Sprühlichtbogenphase dem Stromregler (13) eine Modulatorschaltung (15, 16, 17, 18) derart zugeordnet ist, dass dem Schweißstrom Is ein periodischer wechselfrequenter Strom mit einer Frequenz im Bereich von 20 bis 1000 Hz überlagert ist.

2. Vorrichtung nach Anspruch 1 **dadurch gekennzeichnet, dass** die Frequenz des aufmodulierten Wechselstroms im Bereich von 200 bis 600 Hz liegt.

3. Vorrichtung nach Anspruch 1 **dadurch gekennzeichnet, dass** der aufmodulierte Wechselstrom sinusförmig ist.

4. Vorrichtung nach Anspruch 1 **dadurch gekennzeichnet, dass** der aufmodulierte Wechselstrom sägezahnförmig ist.

5. Vorrichtung nach Anspruch 1 **dadurch gekennzeichnet, dass** der aufmodulierte Wechselstrom trapezförmig ist.

6. Vorrichtung nach Anspruch 1 **dadurch gekennzeichnet, dass** der aufmodulierte Wechselstrom rechteckförmig ist.

7. Vorrichtung nach Anspruch 1 **dadurch gekennzeichnet, dass** die Schaltkreise durch Mikroprozessorschaltkreise gebildet sind.

8. Vorrichtung nach Anspruch 1 **dadurch gekennzeichnet, dass** die Realisierung der Vorrichtung im Wesentlichen ganz oder teilweise durch Software erfolgt.

9. Verfahren zum Metall-Schutzgas (MSG)-Lichtbogenschweißen, bei dem über eine gesteuerte Stromquelle eines Leistungsteils mit Konstantstromcharakteristik ein Schweißprozess (3,4) versorgt wird, wobei die Ansteuerung der Stromquelle über einen Statik-Schaltkreis (10), welchem eine Spannungsistwerterfassung (5) und eine Spannungssollwertvorgabeeinrichtung (9) vorgeordnet sind, und einen Dynamik-Schaltkreis (11) erfolgt, der dem Statik-Schaltkreis (10) nachgeordnet ist und der einen Stromsollwert Iₛₒₗₗ für einen Stromregler (13) des Leistungsteils (1) liefert, wobei der Stromregler (13) seinen Stromistwert Iᵢₛₜ vom einer Stromistwerterfassung (6) erhält, **dadurch gekennzeichnet, dass** dem Statik-Schaltkreis (10) Mittel (7) zur Nachbildung des Innenwiderstandes der Stromquelle zugeordnet ist und dass beim Betrieb in der Sprühlichtbogenphase dem Schweißstrom Is ein periodischer wechselfrequenter Strom mit einer Frequenz im Bereich von 20 bis 1000 Hz überlagert wird.

## Claims

1. A device for metal shielded-arc (MSG) welding comprising
- a power section (1) comprising a power source with constant current characteristics, containing a rectifier supplied by mains voltage, a current transformer connected thereto by means of an intermediate circuit, which is clocked by means of a control device (14) and a secondary-side rectifier, which supplies the welding process (3, 4) via a smoothing member (2),
- a static circuit (10) having an actual voltage detection device (5) and a voltage setpoint setting device (9) located in front thereof,
- a dynamic circuit (11) located after the static circuit (10), which delivers a current setpoint value Iₛₒₗₗ for a current regulator (13) of the power section (1), wherein the current regulator (13) receives its actual current value Iᵢₛₜ from an actual current detection device (6),
**characterised in that that** the static circuit (10) is allocated means (7) for simulating the internal resistance of the power source and that for operation of the device in the corona arc phase, a modulator circuit (15, 16, 17, 18) is assigned to the current regulator (13) in such a manner that a periodic alternating-frequency current having a frequency in the range of 20 to 1000 Hz is superposed on the welding current Is.

2. The device according to claim 1, **characterised in that** the frequency of the modulated alternating current lies in the range of 200 to 600 Hz.

3. The device according to claim 1, **characterised in that** the modulated alternating current is sinusoidal.

4. The device according to claim 1, **characterised in that** the modulated alternating current is sawtooth-shaped.

5. The device according to claim 1, **characterised in that** the modulated alternating current is trapezoidal.

6. The device according to claim 1, **characterised in that** the modulated alternating current is rectangular.

7. The device according to claim 1, **characterised in that** the circuits are formed by microprocessor circuits.

8. The device according to claim 1, **characterised in that** the device is implemented substantially completely or partially by software.

9. A method for metal shielded-arc (MSG) welding in which a welding process (3, 4) is supplied via a controlled power source of a power section having constant current characteristics, wherein the power source is triggered via a static circuit (10) having an actual voltage detection device (5) and a setpoint voltage setting device (9) located in front thereof, and a dynamic circuit (11), which is located after the static circuit (10) and which delivers a current setpoint value Iₛₒₗₗ for a current regulator (13) of the power section (1), wherein the current regulator (13) receives its actual current value Iᵢₛₜ from an actual current detection device (6),
**characterised in that that** the static circuit (10) is allocated means (7) for simulating the internal resistance of the power source and that during operation in the corona arc phase, a periodic alternating-frequency current having a frequency in the range of 20 to 1000 Hz is superposed on the welding current Is.

## Revendications

1. Dispositif de soudage à l'arc de métal sous gaz protecteur (MSG), avec
- un système de puissance (1) représentant une source de courant avec une caractéristique de courant constant, comprenant un redresseur alimenté par la tension de réseau, un convertisseur de courant y étant raccordé par l'intermédiaire d'un circuit intermédiaire, lequel convertisseur de courant est cadencé par un dispositif de commande (14), ainsi qu'un convertisseur secondaire, qui alimente le processus de soudage (3, 4) par l'intermédiaire d'un élément de lissage (2),
- un circuit de commutation statique (10), qui est précédé par un détecteur de valeur effective de la tension (5) et par un indicateur de valeur théorique de la tension (9),
- un circuit de commutation dynamique (11), qui est disposé à la suite du circuit de commutation statique (10) et qui fournit une valeur théorique de puissance Iₛₒₗₗ pour un régulateur d'intensité (13) du système de puissance (1), le régulateur d'intensité (13) recevant sa valeur effective de courant Iᵢₛₜ par un détecteur de valeur effective du courant (6),
**caractérisé en ce que** des moyens (7) pour la simulation de l'impédance interne de la source de courant sont attribués au circuit de commutation statique (10), et **en ce que** pour le fonctionnement du dispositif dans la phase de vaporisation, un circuit de modulateur (15, 16, 17, 18) est attribué de telle façon au régulateur d'intensité (13), qu'un courant alternatif périodique à fréquence variable, avec une fréquence entre 20 et 1000 Hz, se superpose au courant de soudage Is.

2. Dispositif selon la revendication 1, **caractérisé en ce que** la fréquence du courant alternatif modulé mesure entre 200 et 600 Hz.

3. Dispositif selon la revendication 1, **caractérisé en ce que** le courant alternatif modulé a une forme en sinus.

4. Dispositif selon la revendication 1, **caractérisé en ce que** le courant alternatif modulé a une forme en dents de scie.

5. Dispositif selon la revendication 1, **caractérisé en ce que** le courant alternatif modulé a une forme trapézoïdale.

6. Dispositif selon la revendication 1, **caractérisé en ce que** le courant alternatif modulé a une forme rectangulaire.

7. Dispositif selon la revendication 1, **caractérisé en ce que** les circuits de commutation sont formés par des circuits de commutation à microprocesseur.

8. Dispositif selon la revendication 1, **caractérisé en ce que** la mise en oeuvre du dispositif est essentiellement effectuée entièrement ou partiellement à l'aide d'un logiciel.

9. Procédé de soudage à l'arc de métal sous gaz protecteur (MSG), dans lequel un processus de soudage (3, 4) est alimenté par une source de courant commandée d'un système de puissance avec une caractéristique de courant constant, la commande de la source de courant étant effectuée par un circuit de commutation statique (10), auquel précèdent un détecteur de valeur effective de tension (5) et un indicateur de valeur théorique de tension (9), et par un circuit de commutation dynamique (11), qui est disposé à la suite du circuit de commutation statique (10) et qui fournit une valeur théorique d'intensité Iₛₒₗₗ pour un régulateur d'intensité (13) du système de puissance (1), le régulateur d'intensité (13) recevant sa valeur effective d'intensité Iᵢₛₜ par un détecteur de valeur effective de la tension (6), **caractérisé en ce que** des moyens (7) pour la simulation de l'impédance interne de la source de courant sont attribués au circuit de commutation statique (10), et **en ce que** lors du fonctionnement dans la phase de vaporisation, un courant alternatif périodique à fréquence variable, avec une fréquence mesurant entre 20 et 1000 Hz, est superposé au courant de soudage Is.
